# FASCICULE DE BREVET EUROPEEN

(11) **EP 0 929 383 B1**
(45) Date de publication et mention de la délivrance du brevet: **17.05.2000**
(21) Numéro de dépôt: 97943928.8
(22) Date de dépôt: 03.10.1997
(51) Int. Cl.: B26D 3/18, B26D 7/01, B26D 7/06

(54) **MACHINE POUR LE DECOUPAGE EN MORCEAUX CALIBRES DE PRODUITS ALIMENTAIRES**
MASCHINE ZUM AUF GENAUES MASS ZERKLEINERN VON NAHRUNGSMITTELN
MACHINE FOR CUTTING OUT CALIBRATED PIECES OF FOOD PRODUCTS

(30) Priorité: 07.10.1996 FR 9612470
(43) Date de publication de la demande: 21.07.1999
(73) Titulaire: Emsens, Michel, 42490 Fraisses (FR)
(72) Inventeur: Emsens, Michel, 42490 Fraisses (FR)
(74) Mandataire: Thivillier, Patrick
(86) Numéro de dépôt international: FR9701746
(87) Numéro de publication internationale: WO9815394

(56) Documents cités:
- EP-A- 0 366 441
- EP-A- 0 713 753
- DE-A- 3 243 448
- DE-C- 4 444 506
- GB-A- 838 179
- US-A- 2 236 176
- US-A- 4 436 012
- US-A- 4 544 103
- US-A- 5 038 649

## Description

L'invention se rattache au secteur technique des machines agro-alimentaires pour la production en continu de morceaux calibrés sous forme de dés par exemple.

On connaît des machines conçues pour traiter des morceaux de viande notamment, équipées de moyens pour les découper selon plusieurs plans verticaux et horizontaux afin d'obtenir des morceaux d'épaisseur réduite. Généralement, ces machines utilisent un système de coupe mettant en oeuvre une première grille composée de plusieurs lames verticales et une seconde grille juxtaposée composée de plusieurs lames horizontales. En relation avec ces grilles, une lame rotative disposée latéralement assure une coupe dans un plan orthogonal pour former des morceaux calibrés. Cet état de la technique peut être illustré, à titre indicatif mais non limitatif, par l'enseignement du brevet FR 2.651.167 dont le Demandeur de la présente est également le titulaire. Ce document définit le préambule de la revendication 1 et est considéré comme l'état de la technique le plus proche.

Pour l'essentiel, la machine décrite dans ce brevet comprend une chambre ou enceinte délimitant un volume fermé destiné à recevoir le produit à trancher. L'une des extrémités de l'enceinte coopère avec un organe poussoir pour assurer le déplacement linéaire du produit en direction du système de coupe conformé pour constituer les dés ou morceaux de viande calibrés. Le produit alimentaire à traiter peut présenter au départ différentes formes.

Par exemple, ce produit peut être constitué par une tranche de viande d'épaisseur plus ou moins importante. Dans ce cas, l'enceinte délimite un volume correspondant très sensiblement à celui de la tranche, un organe presseur permettant d'ajuster le volume de l'enceinte en fonction de l'épaisseur de la tranche.

Ou bien le produit peut être constitué par un bloc de viande ou autre délimitant un volume important qui est le plus souvent de forme parallélépipédique. Pour cette raison, l'enceinte de la machine délimite un volume de forme générale parallélépipédique permettant d'assurer le centrage et le guidage du produit à découper dans les conditions susindiquées. Il est en effet très important que le produit sous forme d'un bloc, puisse être constamment guidé et centré au fur et à mesure de son déplacement en direction des systèmes de coupe et de prétranchage afin d'obtenir des morceaux calibrés présentant un aspect convenable en leur évitant d'être déchiquetés au niveau des lames de coupe. Compte tenu de la forme parallélépipédique du bloc de viande ou autre à traiter, ce centrage et ce guidage dans l'enceinte ne posent pas de problème particulier.

Par contre, cette enceinte ne peut recevoir qu'un type bien particulier de produit qui devra en tout état de cause présenter un volume général parallélépipédique ou sensiblement parallélépipédique. Il n'est donc pas possible de traiter, dans de bonnes conditions, un produit alimentaire sous forme d'un bloc délimitant un volume différent, notamment cylindrique. Or, de plus en plus, les produits alimentaires se présentent, soit sous la forme d'un bloc parallélépipédique, soit sous la forme d'un bloc cylindrique.

Dans ces conditions, il est apparu important de pouvoir traiter sur une même machine, tout type de bloc de viande ou autre, en vue d'obtenir dans de très bonnes conditions des morceaux découpés parfaitement calibrés. Notamment, il a été nécessaire de résoudre le problème posé du guidage et du centrage constants du produit lorsque ce dernier n'est pas parallélépipédique, mais présente une forme générale cylindrique.

Le problème que se propose donc de résoudre l'invention est de pouvoir traiter sur une même machine un produit alimentaire délimitant un volume général de forme quelconque en ayant pour objectif d'obtenir, quelle que soit cette forme, des morceaux découpés parfaitement calibrés.

Pour résoudre ce problème, il a été conçu et mis au point une machine du type de celle comprenant de manière connue :
- une chambre ou enceinte dans laquelle est disposé le produit à traiter ;
- au moins un vérin équipé d'un organe poussoir pour diriger le produit en direction d'un système de grilles coupantes aptes à réaliser une pluralité de coupes selon deux plans orthogonaux ;
- une lame tranchante disposée devant le système de grilles peut provoquer le découpage en morceaux calibrés du produit, au fur et à mesure de son déplacement au travers desdites grilles.

Selon l'invention, à partir de ce type de machine et compte tenu du problème posé à résoudre :
- la chambre présente un élément conformateur en deux parties emboîtables;
- l'une des parties est fixe et présente des agencements d'accouplement d'une manière démontable avec une partie de la chambre ;
- l'autre partie est mobile et présente des agencements d'accouplement de manière démontable avec une partie d'un organe de remplissage et de fermeture de la chambre ;
- la partie mobile est disposée latéralement par rapport à la partie fixe ;
- l'ensemble des parties de l'élément conformateur délimite un volume interne correspondant au volume externe du produit à découper ;
- les grilles coupantes sont montées dans une ouverture d'un support délimitant une forme correspondant à celle du volume interne, ladite ouverture étant disposée coaxialement audit volume.

Pour résoudre le problème posé de pouvoir modifier à volonté le volume de la chambre en fonction du volume du produit à traiter, les moyens d'accouplement de la partie fixe de l'élément conformateur sont constitués par une rainure coopérant avec une glissière profilée que présente une partie de la chambre.

La partie fixe présente un rebord équerré dans l'épaisseur duquel est formée la rainure d'accouplement qui est débouchante pour coopérer par coulissement avec la glissière de la chambre, ladite partie fixe ayant une longueur correspondant sensiblement à celle de la chambre.

Pour résoudre le problème posé d'assurer le centrage et le guidage constants du produit lorsqu'il est soumis à l'action des grilles coupantes, les supports desdites grilles sont montés d'une manière amovible en alignement coaxial avec l'ouverture débouchante de la chambre recevant les éléments conformateurs, de sorte que la forme des grilles est disposée en continuité avec la forme du volume interne délimité par lesdits éléments conformateurs.

Avantageusement, toujours en ayant pour objectif d'avoir un guidage et un centrage constants du produit au fur et à mesure de son déplacement dans la chambre en fonction du volume dudit produit, l'organe poussoir a une forme correspondant à celle du volume interne délimité par les éléments conformateurs, ledit organe présentant des agencements d'accouplement avec la tige du vérin.

L'invention est exposée ci-après plus en détail à l'aide des dessins annexés dans lesquels :

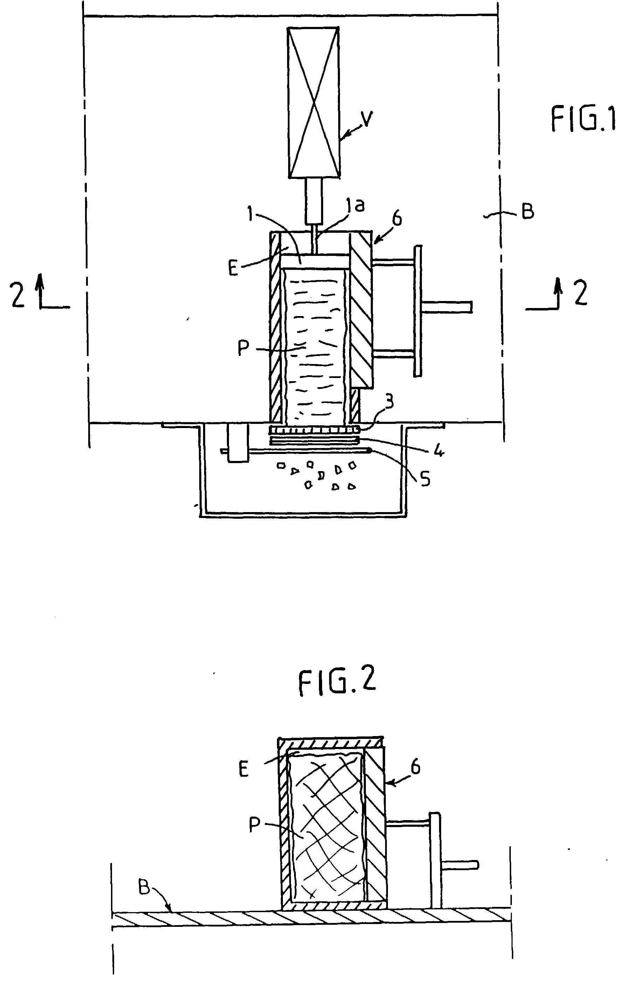

- la figure 1 est une vue en plan à caractère schématique d'un exemple de réalisation de la machine ;
- la figure 2 est une vue en coupe longitudinale considérée selon la ligne 2-2 de la figure 1 ;
- la figure 3 est une vue en perspective avant emboîtement des parties constitutives de l'élément conformateur dans le cas d'un produit de volume général cylindrique ;
- la figure 4 est une vue correspondant à la figure 3 après emboîtement des parties constitutives de l'élément conformateur ;
- la figure 5 est une vue semblable à la figure 3 dans le cas d'un produit de volume général paralléllépipédique ;
- la figure 6 est une vue correspondant à la figure 5 après emboîtement des parties constitutives de l'élément conformateur ;
- la figure 7 est une vue de face d'un support de grilles coupantes dans le cas d'une forme circulaire ;
- la figure 8 est une vue semblable à la figure 7 dans le cas d'une forme quadrangulaire ;

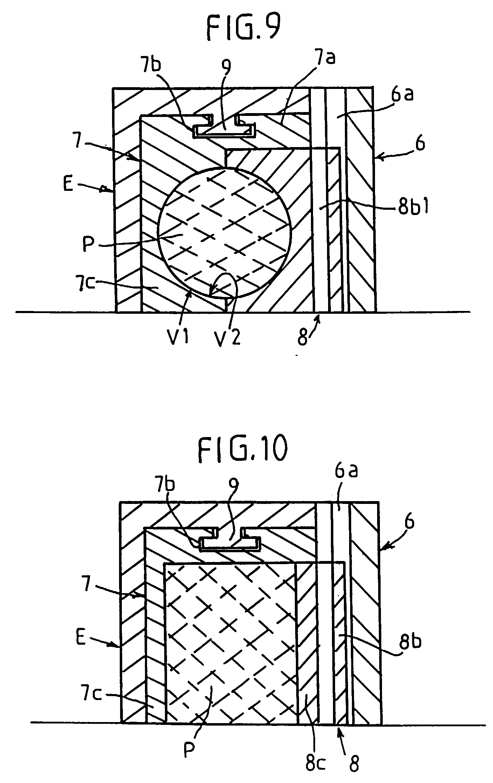

- la figure 9 est une vue en coupe transversale considérée au droit de l'élément conformateur recevant un produit de forme générale cylindrique ;
- la figure 10 est une vue semblable à la figure 9 dans le cas d'un produit de forme générale quadrangulaire.

On rappelle pour une meilleure compréhension de la suite de la description, que la machine présente un bâti support (B) équipé d'une chambre ou enceinte (E) destinée à recevoir le produit alimentaire à traiter (P). L'enceinte (E) délimite un volume fermé de forme générale parallélépipédique. Un organe poussoir (1) est monté avec capacité de coulissement à l'intérieur de l'enceinte (E) en étant assujetti par exemple à un vérin double effet (V). Le vérin (V) est disposé à l'arrière de la chambre et coaxialement à cette dernière. A l'opposé du vérin (V), l'enceinte (E) est débouchante pour être en communication avec un système de grilles coupantes (3) et (4), et une lame rotative de coupe (5). Les grilles (3) et (4) sont juxtaposées, la grille (3) présentant par exemple une pluralité de lames verticales (3a), tandis que la grille (4) présente une pluralité de lames horizontales (4a). Un organe moteur, non représenté, coopère avec le support (3b), (4b) de chacune des grilles pour soumettre les lames correspondantes à un mouvement de déplacement alternatif en translation.

Le déplacement du produit (P) au travers des grilles (3) et (4) sous l'effet de poussée du vérin (V), provoque, en combinaison avec l'action de la lame rotative (5), le découpage du produit (P) selon une pluralité de morceaux calibrés. Le produit (P) est positionné dans l'enceinte (E) au moyen d'un organe chargeur (6) disposé latéralement à l'enceinte (E). L'organe chargeur (6) est accouplé à tout moyen mécanique, pneumatique ou autre pour être déplacé linéairement en direction de l'enceinte (E).

Selon une caractéristique à la base de l'invention, la chambre ou enceinte (E) présente des moyens pour le montage d'une manière amovible d'éléments conformateurs désignés dans leur ensemble par (C) et dont les formes et dimensions sont déterminées pour délimiter un volume interne (V1) correspondant au volume externe (V2) du produit (P) à découper. Avantageusement, chaque élément conformateur (C) est exécuté en deux parties emboîtables (7) et (8) profilées pour délimiter en combinaison le volume souhaité (V1).

La partie (7) est fixe et présente des agencements d'accouplement temporaires avec la chambre (E). Par exemple, la partie (7) présente un rebord équerré (7a) dans l'épaisseur duquel est formée une rainure débouchante (7b) de section transversale en T renversé. Cette rainure (7b) coopère par coulissement avec une nervure de forme complémentaire (9) que présente la chambre (E), notamment la face de dessus de cette dernière. Le rebord équerré (7a) est prolongé par un bord latéral (7c) coopérant en appui avec le bord latéral correspondant de la chambre (E).

La partie (8) est mobile et est conformée pour être emboîtée en combinaison avec la partie fixe (7). Notamment, la partie (8) coopère avec le rebord équerré (7a) et le bord latéral (7c). En outre, cette partie (8) présente sur la totalité de sa longueur, un évidement (8a) destiné à constituer, en combinaison avec un évidement complémentaire (7d) de la partie fixe (7), le volume interne (V1) correspondant au produit à traiter.

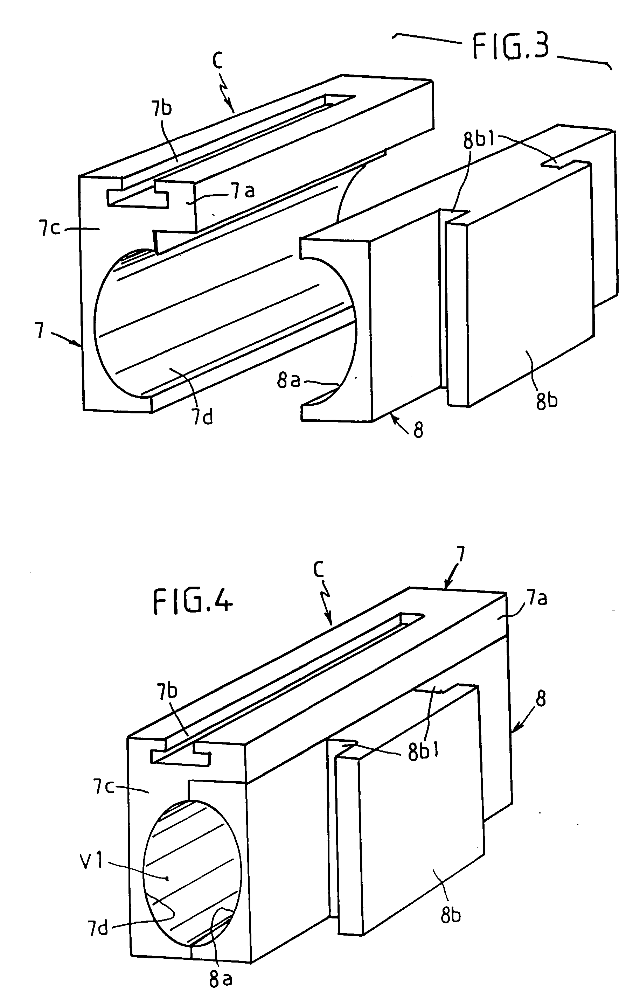

Dans l'exemple des figures 3 et 4, après emboîtement des parties (7) et (8), les évidements (7d) et (8a) délimitent un volume interne de forme générale circulaire. La partie mobile (8) présente des agencements d'accouplement (8b) aptes à coopérer avec des agencements complémentaires que présente le chargeur (6). Par exemple, le bord latéral externe de la partie (8) présente une forme de centrage délimitant deux rainures d'extrémité verticale (8b1) pour être engagées sur des parties correspondantes (6a) du chargeur (6).

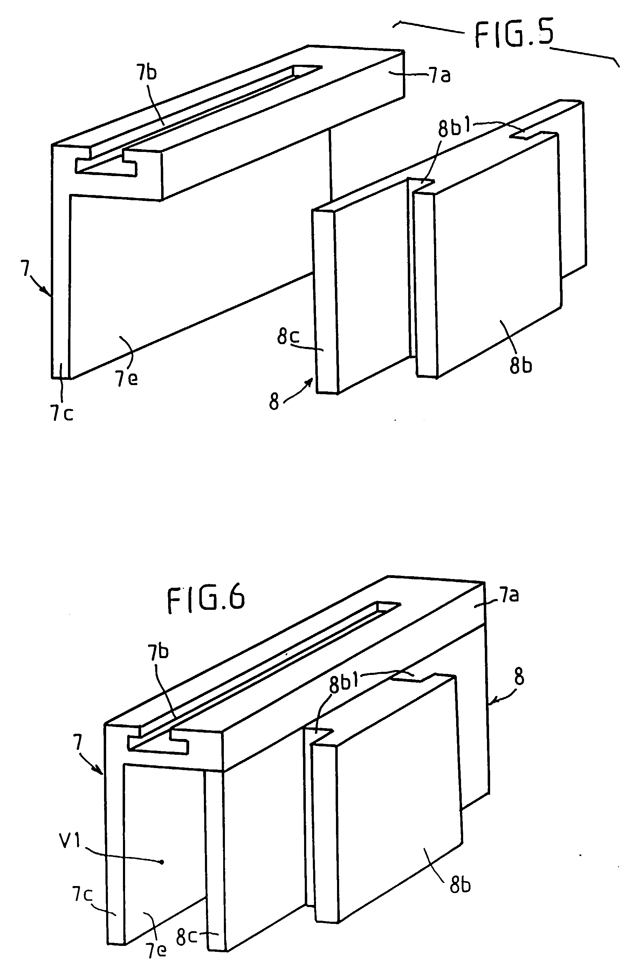

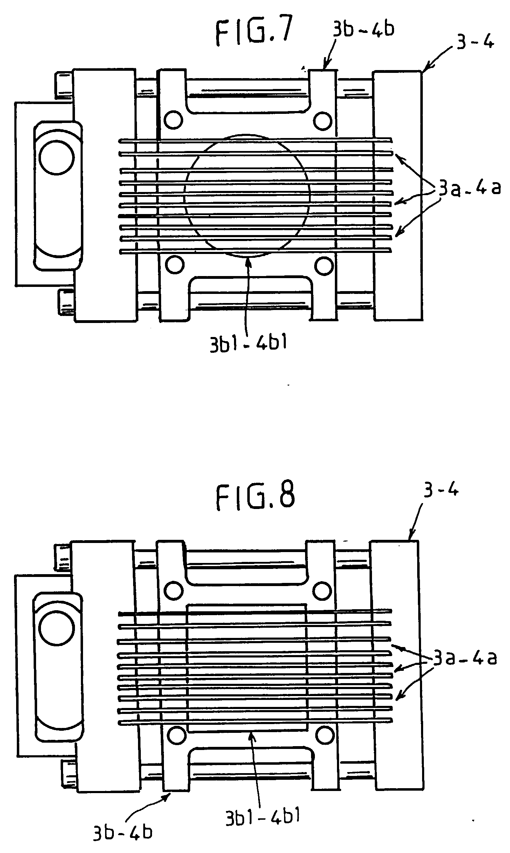

Dans le cas où l'élément conformateur doit délimiter un volume interne (V1) de section quadrangulaire, il suffit d'adapter en conséquence les parties (7) et (8). Dans ce cas, comme le montrent les figures 5 et 6, le bord latéral (7c) présente une face interne (7e) plan et rectiligne tandis que la partie (8) présente simplement une face d'appui rectiligne et verticale (8c). Bien évidemment, les dimensions des évidements (7d) et (8a), ou bien l'épaisseur des parties (7e) et (8c) sont déterminées en fonction des dimensions du volume (V1) souhaité.

Après emboîtement des parties (7) et (8), quelle que soit leur forme de réalisation, l'élément conformateur ainsi constitué, présente des dimensions externes (longueur, largeur et profondeur) correspondant à celles de la chambre (E).

Suivant une autre caractéristique de l'invention, les supports (3b) et (4b) des grilles coupantes présentent une ouverture faciale au travers de laquelle débouchent lesdites grilles, ladite ouverture ayant une forme correspondant à la section transversale du volume interne considéré (V1), c'est-à-dire au volume externe du produit à traiter. Dans le cas d'un volume (V1) de section transversale circulaire, chacun des supports (3b) et (4b) délimite une ouverture centrale (3b1) et (4b1) au travers de laquelle passent les lames verticales (3a) ou horizontales (4a), de forme générale circulaire (figure 7). Dans le cas d'un volume (V1) de section transversale quadrangulaire (carrée, rectangulaire...), chacun des supports (3b) et (4b) délimite une ouverture centrale (3b1) et (4b1) de forme correspondante (carrée, rectangulaire...) (voir figure 8).

Les supports (3b) et (4b) sont montés indépendamment d'une manière amovible en alignement coaxial avec l'ouverture débouchante de la chambre (E) recevant les parties (7) et (8) de l'élément conformateur correspondant. Par exemple, ces supports (3b) et (4b) sont montés sur des pions de centrage et de guidage formés de part et d'autre de l'ouverture débouchante de la chambre. Il en résulte, qu'après montage en juxtaposition des supports (3b) et (4b) sur les pions de centrage, leurs ouvertures correspondantes (3b1) et (4b1) au travers desquelles débouchent les lames, sont disposées rigoureusement en alignement coaxial et en continuité avec la forme de volume interne (V1).

Compte tenu de ces dispositions, il n'y a donc pas d'interruption au niveau du volume interne (V1) et des grilles de coupe de sorte que le produit est constamment guidé et centré y compris au niveau de l'action des différentes lames de coupe.

Toujours en ayant pour objectif d'assurer un centrage constant du produit à l'intérieur du volume (V1) généré par l'emboîtement des parties (7) et (8) de l'élément conformateur considéré, l'organe poussoir (1) a une forme correspondant à celle dudit volume (V1). Cet organe poussoir a donc une forme générale circulaire ou quadrangulaire. Dans ces conditions, cet organe poussoir (1) est accouplé d'une manière démontable par rapport au vérin (V) au moyen par exemple d'une tige (1a) conformée pour être emmanchée à force dans un alésage correspondant formé en bout de la tige du vérin (V).

Il apparaît donc, compte tenu de ces dispositions constructives, qu'il est possible avec une seule machine présentant au départ une chambre ou enceinte (E) de forme générale quadrangulaire, de traiter tout type de produit quelle que soit la forme générale de son volume externe. Il suffit pour cela d'équiper la chambre (E) de l'élément conformateur correspondant. La partie (7a) de l'élément conformateur considéré, est accouplée au niveau de la nervure (9) de l'enceinte tandis que le chargeur (6) est équipé de l'autre partie correspondante (8) de l'élément conformateur. On obtient ainsi une nouvelle chambre dont le volume interne (V1) correspond très exactement au volume externe du produit (P) à traiter. Les systèmes de grilles coupantes (3) et (4) sont adaptés en conséquence.

Les éléments conformateurs, notamment les parties (7) et (8) sont exécutés en matériau plastique moulé du type alimentaire. Les différents moyens de commande des organes de la machine au niveau notamment du vérin poussoir, du chargeur, de la coupe, ne sont pas décrits en détail car ils ne font pas partie de l'objet spécifique de l'invention et peuvent présenter différents modes d'exécution parfaitement connus pour un homme du métier.

Les avantages ressortent bien de la description. En particulier on souligne et on rappelle :
- la facilité de transformer le volume de la chambre destinée à recevoir le produit alimentaire à traiter, afin de l'adapter très exactement au volume externe du produit considéré ;
- le guidage et le centrage constants du produit, notamment au niveau du système de coupe au fur et à mesure de son déplacement continu ;
- la simplicité de réalisation.

## Revendications

1. Machine pour le découpage en morceaux calibrés de produits alimentaires comprenant :
- une chambre (E) dans laquelle est disposé le produit ;
- au moins un vérin (V) équipé d'un organe poussoir (1) pour diriger le produit en direction d'un système de grilles coupantes (3), (4) aptes à réaliser une pluralité de coupes selon deux plans orthogonaux ;
- une lame tranchante (5) disposée devant le système de grilles (3), (4) pour provoquer le découpage en morceaux du produit au fur et à mesure de ce déplacement au travers desdites grilles,
caractérisée en ce que :
- la chambre (E) présente un élément conformateur en deux parties emboîtables (7) et (8) ;
- l'une des parties (7) est fixe et présente des agencements d'accouplement d'une manière démontable avec une partie de la chambre (E) ;
- l'autre partie (8) est mobile et présente des agencements d'accouplement (8b) de manière démontable avec une partie d'un organe de remplissage et de fermeture (6) de la chambre (E) ;
- la partie mobile (8) est disposée latéralement par rapport à la partie fixe (7) ;
- l'ensemble des parties (7) et (8) de l'élément conformateur, délimite un volume interne (V1) correspondant au volume externe du produit à découper ;
- les grilles coupantes sont montées dans une ouverture d'un support (3b) - (4b) délimitant une forme (3b1) - (4b1) correspondant à celle du volume interne (V1), ladite ouverture étant disposée coaxialement audit volume (V1).

2. Machine selon la revendication 1, caractérisée en ce que les parties (7) et (8) de chaque élément conformateur délimitent une section transversale circulaire.

3. Machine selon la revendication 1, caractérisée en ce que les parties (7) et (8) de chaque élément conformateur délimitent une section transversale polygonale.

4. Machine selon la revendication 1, caractérisée en ce que les moyens d'accouplement de la partie fixe (7) de l'élément conformateur sont constitués par une rainure (7b) coopérant avec une glissière profilée (9) que présente une partie de la chambre (E).

5. Machine selon la revendication 4, caractérisée en ce que la partie fixe (7) présente un rebord équerré (7a) dans l'épaisseur duquel est formée la rainure d'accouplement (7b) qui est débouchante pour coopérer par coulissement avec la glissière (9) de la chambre (E), ladite partie fixe (7) ayant une longueur correspondant sensiblement à celle de la chambre (E).

6. Machine selon la revendication 1, caractérisée en ce que les supports (3b), (4b) des grilles coupantes (3), (4) sont montés d'une manière amovible en alignement coaxial avec l'ouverture débouchante de la chambre recevant les parties (7) et (8) de l'élément conformateur, de sorte que l'ouverture du support autour de laquelle apparaissent les grilles est disposée en continuité avec la forme du volume interne délimité par lesdits éléments conformateurs.

7. Machine selon la revendication 1, caractérisée en ce que les parties (7) et (8) de l'élément conformateur sont en matériau moulé du type alimentaire.

8. Machine selon la revendication 1, caractérisée en ce que l'organe poussoir (1) a une forme correspondant à celle du volume interne délimité par les éléments conformateurs (7) et (8), ledit organe (1) présentant des agencements d'accouplement (1a) avec la tige du vérin.

## Patentansprüche

1. Maschine zum Schneiden von Nahrungsmitteln in kalibrierte Stücke, die folgendes umfaßt:
- eine Kammer (E), in der das Produkt angeordnet ist;
- mindestens einen mit einem Schiebeglied (1) versehenen Zylinder (V) zum Leiten des Produktes in Richtung eines Systems aus Schneidgittern (3), (4), die mehrere Schnitte entlang zweier orthogonaler Ebenen durchführen können;
- ein vor dem aus Gittern (3), (4) bestehenden System angeordnetes Schneidmesser (5) zur Bewirkung des Schneidens des Produktes in Stücke während dieser Verschiebung über die Gitter,
dadurch gekennzeichnet, daß
- die Kammer (E) ein aus zwei ineinanderschiebbaren Teilen (7) und (8) bestehendes Formgebungselement aufweist;
- eines der Teile (7) feststehend ist und Anordnungen zur lösbaren Verbindung mit einem Teil der Kammer (E) aufweist;
- das andere Teil (8) beweglich ist und Anordnungen (8b) zur lösbaren Verbindung mit einem Teil eines Füll- und Schließglieds (6) der Kammer (E) aufweist;
- das bewegliche Teil (8) seitlich bezüglich des feststehenden Teils (7) angeordnet ist;
- die Teile (7) und (8) des Formgebungselements zusammen ein Innenvolumen (V1) begrenzen, das dem Außenvolumen des zu schneidenden Produktes entspricht;
- die Schneidgitter in einer Öffnung einer Stütze (3b) - (4b) angebracht sind, die eine Form (3b1) - (4b1) begrenzt, die der des Innenvolumens (V1) entspricht, wobei die Öffnung koaxial mit dem Volumen (V1) angeordnet ist.

2. Maschine nach Anspruch 1, dadurch gekennzeichnet, daß die Teile (7) und (8) jedes Formgebungselements einen kreisrunden Querschnitt begrenzen.

3. Maschine nach Anspruch 1, dadurch gekennzeichnet, daß die Teile (7) und (8) jedes Formgebungselements einen polygonalen Querschnitt begrenzen.

4. Maschine nach Anspruch 1, dadurch gekennzeichnet, daß die Mittel zur Verbindung des feststehenden Teils (7) des Formgebungselements aus einer mit einer profilierten Führung (9) zusammenwirkenden Nut (7b) bestehen, die ein Teil der Kammer (E) darstellt.

5. Maschine nach Anspruch 4, dadurch gekennzeichnet, daß der feststehende Teil (7) einen Winkelrand (7a) aufweist, in dessen Dicke die Verbindungsnut (7b) ausgebildet ist, die zum Zusammenwirken durch Gleiten mit der Führung (9) der Kammer (E) offen ist, wobei der feststehende Teil (7) eine Länge aufweist, die im wesentlichen der der Kammer (E) entspricht.

6. Maschine nach Anspruch 1, dadurch gekennzeichnet, daß die Stützen (3b), (4b) der Schneidgitter (3), (4) in koaxialer Ausrichtung auf die freie Öffnung der Kammer, die die Teile (7) und (8) des Formgebungselements aufnimmt, lösbar angebracht sind, so daß die Öffnung der Stütze, um die herum die Gitter zu sehen sind, mit der Form des durch die Formgebungselemente begrenzten Innenvolumens durchgehend angeordnet ist.

7. Maschine nach Anspruch 1, dadurch gekennzeichnet, daß die Teile (7) und (8) des Formgebungselements aus für Nahrungsmittel geeignetem Formwerkstoff bestehen.

8. Maschine nach Anspruch 1, dadurch gekennzeichnet, daß das Schiebeglied (1) eine Form aufweist, die der des durch die Formgebungsteile (7) und (8) begrenzten Innenvolumens entspricht, wobei das Glied (1) Anordnungen (1a) zur Verbindung mit der Zylinderstange aufweist.

## Claims

1. Machine for cutting food products into calibrated pieces, comprising:
- a chamber (E), in which the product is arranged;
- at least one jack (V) equipped with a pusher member (1) for leading the product in the direction of a system of cutting grids (3), (4) which are capable of making a plurality of cuts along two orthogonal planes;
- a slicing blade (5) arranged in front of the system of grids (3), (4) in order to cause the product to be cut into pieces during this displacement through the said grids,
characterized in that:
- the chamber (E) has a shaping element in two interlocking parts (7) and (8);
- one of the parts (7) is fixed and has means of coupling it detachably to a part of the chamber (E);
- the other part (8) is movable and has means (8b) of coupling it detachably to a part of a member (6) for filling and closing the chamber (E);
- the movable part (8) is arranged laterally to the fixed part (7);
- each of the parts (7) and (8) of the shaping element delimits an internal volume (V1) corresponding to the external volume of the product to be cut up; and
- the cutting grids are mounted in an orifice of a support (3b)-(4b) delimiting a shape (3b1)-(4b1) corresponding to that of the internal volume (V1), the said orifice being arranged coaxially to the said volume (V1).

2. Machine according to Claim 1, characterized in that the parts (7) and (8) of each shaping element delimit a circular cross section.

3. Machine according to Claim 1, characterized in that the parts (7) and (8) of each shaping element delimit a polygonal cross section.

4. Machine according to Claim 1, characterized in that the coupling means of the fixed part (7) of the shaping element consist of a slot (7b) co-operating with a profiled guide (9) present on a part of the chamber (E).

5. Machine according to Claim 4, characterized in that the fixed part (7) has a squared-off rim (7a), in the thickness of which is formed the coupling slot (7b) which is open-ended, in order to cooperate by sliding with the slide (9) of the chamber (E), the said fixed part (7) having a length corresponding substantially to that of the chamber (E).

6. Machine according to Claim 1, characterized in that the supports (3b), (4b) of the cutting grids (3), (4) are removably mounted in coaxial alignment with the open-ended orifice of the chamber receiving the parts (7) and (8) of the shaping element, in such a way that the support orifice, around which the grids appear, is arranged in continuity with the shape of the internal volume delimited by the said shaping elements.

7. Machine according to Claim 1, characterized in that the parts (7) and (8) of the shaping element are made from molded material of the food-compatible type.

8. Machine according to Claim 1, characterized in that the pusher member (1) has a shape corresponding to that of the internal volume delimited by the shaping elements (7) and (8), the said member (1) having arrangements (1a) for coupling to the rod of the jack.
